Europäisches Patentamt

European Patent Office

Office européen des brevets

(19)

(11) **EP 1 530 072 A1**

(12) **EUROPEAN PATENT APPLICATION**

(43) Date of publication:
**11.05.2005 Bulletin 2005/19**

(51) Int Cl.7: **G02B 15/17**, G02B 15/10

(21) Application number: **04256596.0**

(22) Date of filing: **26.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **07.11.2003 JP 2003378197**

(71) Applicant: **CANON KABUSHIKI KAISHA**
**Tokyo (JP)**

(72) Inventor: **Nurishi, Ryuji,**
**c/o Canon Kabushiki Kaisha**
**Tokyo (JP)**

(74) Representative:
**Beresford, Keith Denis Lewis et al**
**BERESFORD & Co.**
**16 High Holborn**
**London WC1V 6BX (GB)**

(54) **Zoom lens with insertable focal length converter and image taking system**

(57)    A zoom lens is disclosed which has a small movement amount of the movable focusing lens unit (FR) and is capable of maintaining the movement amount of the movable focusing lens unit constant, regardless of whether the focal-length changing optical system (IE) is inserted or detached. The zoom lens has favorable operability during manual zooming, is capable of performing autofocusing and achieves a high zoom ratio and compactness. The zoom lens includes a varying magnification lens unit (V) which is movable; a focusing lens unit (FR) which is movable and is disposed on an image side with respect to the varying magnification lens unit; and a focal-length changing optical system (IE) which changes the focal length of the zoom lens.

FIG.12

EP 1 530 072 A1

**EP 1 530 072 A1**

## Description

The present invention relates to zoom lenses, which are suitable for image-taking apparatuses such as film cameras, television cameras and video cameras. In particular, the invention relates to rear focus type zoom lenses in which a movable focusing lens unit is placed closer to an image side than a movable varying magnification lens unit, and a removable focal-length changing optical system is disposed on the image side of the movable focusing lens unit.

A rear focus type zoom lens with a movable focusing lens unit disposed closer to the image side than a movable varying magnification lens unit is advantageous in reducing the size and the weight of the focusing lens unit, and has therefore been widely used for autofocus type zoom lenses.

On the other hand, a front lens focus type zoom lens with a movable focusing lens unit disposed closer to the object side than a movable varying magnification lens unit maintains the same movement amount even when zooming is performed, and therefore is favorable for manual focus type zoom lenses and is widely used for zoom lenses for broadcasting and professional uses, which place importance on manual operations.

In view of the foregoing, Japanese Patent No. 2561637 and Japanese Utility Model Publication No. S62 (1987)-43286, for example, disclose a zoom lens which uses a lens unit disposed closer to the image side than a movable varying magnification lens unit for autofocusing and a lens unit disposed closer to the object side than the movable varying magnification lens unit for manual focusing.

Incidentally, the zoom lenses for broadcasting and professional uses generally adopt a configuration in which a substantially afocal focal-length changing optical system IE can be inserted into and detached from light flux of a relay lens unit such that the magnification range can be readily changed.

For example, the zoom lens disclosed in Japanese Patent Application Laid Open No. H6 (1994)-27381 has an afocal lens unit disposed on the object side of a condenser type lens unit, performs focusing with a lens unit which is disposed on the image side of a compensator lens unit in the afocal lens unit, and is configured such that the focal length is varied by interchanging the condenser type lens unit.

Further, the zoom lens disclosed in Japanese Patent Application Laid Open No. H8 (1996)-201697 is made up of a positive first lens unit, a negative second lens unit, a negative third lens unit, a positive fourth lens unit and a positive fifth lens unit. The first, third and fifth lens units are fixed during zooming, the second lens unit moves during zooming, and the fourth lens unit moves to correct fluctuations of the imaging point caused by zooming and to perform focusing. The imaging point of light flux transmitted through the fourth lens unit is substantially infinity, and a predetermined optical element is provided removably between the fourth and the fifth lens units.

However, since the zoom lens disclosed in Japanese Patent No. 2561637 or Japanese Utility Model Publication No. S62 (1987)-43286 carries out focusing with the lens unit disposed closest to the image side, the movement amount of the focusing lens unit increases by a factor of $\beta^2$ when the focal-length changing optical system IE with a conversion magnification of $\beta$ is inserted on the object side of the focusing lens unit. This presents the problems of necessitating space for movement of the focusing lens unit and thus increasing its size, or significantly displacing the focus momentarily at the time of inserting or removing the focal-length changing optical system IE.

In the case of the zoom lens disclosed in Japanese Patent Application Laid Open No. H6 (1994)-27381, although the movement amount does not change as a result of converting the focal length, it is necessary to provide a flange-back adjusting mechanism for each lens unit since the condenser type lens unit is interchanged. This results in the problem of complicating the mechanism, thus increasing the size of the zoom lens.

Further, in the case of the zoom lens disclosed in Japanese Patent Laid Open No. H8 (1996)-201697, the movement amount of the focusing lens unit does not change as a result of converting the focal length, and it is possible to provide a flange-back adjusting mechanism for the fifth lens unit. However, it is difficult to control the zooming function with a mechanical cam, since the focusing lens unit also serves as an imaging point correcting lens unit. This presents the problem of deteriorating tracing performance and operability during manual zooming, which are desired for broadcasting uses.

Therefore, it is a concern of the present invention to provide a zoom lens which has a small movement amount of the focusing lens unit and is capable of maintaining the movement amount of the focusing lens unit constant, regardless of whether the focal-length changing optical system is inserted or detached. The zoom lens has favorable tracing performance and operability during manual zooming operations, is capable of performing autofocusing and manual focusing and achieves a high zoom ratio and compactness.

A zoom lens according to one aspect of the present invention includes a varying magnification lens unit which is movable; a focusing lens unit which is movable and is disposed on an image side with respect to the varying magnification lens unit; and a focal-length changing optical system arranged on the image side with respect to the focusing lens unit so as to be insertable onto and detachable from an optical axis of the zoom lens, which changes a focal length of the zoom lens.

Further, an image-taking system according to another aspect of the present invention includes an image-taking apparatus; and the above-described zoom lens mounted on the image-taking apparatus.

**EP 1 530 072 A1**

Other features and advantages of the present invention will be apparent from the following description taken in conjunction with the accompanying drawings, in which like reference characters designate the same or similar parts throughout the figures thereof.

The accompanying drawings, which are incorporated in and constitute a part of the specification, illustrate embodiments of the invention and, together with the description, serve to explain the principles of the invention.

FIG. 1 shows a cross-sectional view of a zoom lens according to Example 1 of the present invention at the wide angle end.

FIG. 2 is a diagram showing an optical path in Numerical Example 1 when f is 10.30 mm and the object distance is 2.5 m.

FIG. 3 is a diagram showing an optical path in Numerical Example 1 when f is 39.45 mm and the object distance is 2.5 m.

FIG. 4 is a diagram showing an optical path in Numerical Example 1 when f is 151.10 mm and the object distance is 2.5 m.

FIG. 5 is a diagram showing an optical path in Numerical Example 1 when f is 151.10 mm and the object distance is infinity.

FIG. 6 is a diagram showing an optical path in Numerical Example 1 when f is 151.10 mm and the object distance is 1 m.

FIG. 7 shows an aberration chart of Numerical Example 1 when f is 10.30 mm and the object distance is 2.5 m.

FIG. 8 shows an aberration chart of Numerical Example 1 when f is 39.45 mm and the object distance is 2.5 m.

FIG. 9 shows an aberration chart of Numerical Example 1 when f is 151.10 mm and the object distance is 2.5 m.

FIG. 10 shows an aberration chart of Numerical Example 1 when f is 151.10 mm and the object distance is infinity.

FIG. 11 shows an aberration chart of Numerical Example 1 when f is 151.10 mm and the object distance is 1 m.

FIG. 12 shows a cross-sectional view of a zoom lens according to Example 2 of the present invention at the wide angle end.

FIG. 13 is a diagram showing an optical path in Numerical Example 2 when f is 20.60 mm and the object distance is 2.5 m.

FIG. 14 is a diagram showing an optical path in Numerical Example 2 when f is 78.90 mm and the object distance is 2.5 m.

FIG. 15 is a diagram showing an optical path in Numerical Example 2 when f is 302.20 mm and the object distance is 2.5 m.

FIG. 16 is a diagram showing an optical path in Numerical Example 2 when f is 302.20 mm and the object distance is infinity.

FIG. 17 is a diagram showing an optical path in Numerical Example 2 when f is 302.20 mm and the object distance is 1 m.

FIG. 18 shows an aberration chart of Numerical Example 2 when f is 20.60 mm and the object distance is 2.5 m.

FIG. 19 shows an aberration chart of Numerical Example 2 when f is 78.90 mm and the object distance is 2.5 m.

FIG. 20 shows an aberration chart of Numerical Example 2 when f is 302.20 mm and the object distance is 2.5 m.

FIG. 21 shows an aberration chart of Numerical Example 2 when f is 302.20 mm and the object distance is infinity.

FIG. 22 shows an aberration chart of Numerical Example 2 when f is 302.20 mm and the object distance is 1 m.

FIG. 23 shows a cross-sectional view of a zoom lens according to Example 3 of the present invention at the wide angle end.

FIG. 24 is a diagram showing an optical path in Numerical Example 3 when f is 10.30 mm and the object distance is 50 m.

FIG. 25 is a diagram showing an optical path in Numerical Example 3 when f is 20.60 mm and the object distance is 50 m.

FIG. 26 is a diagram showing an optical path in Numerical Example 3 when f is 39.45 mm and the object distance is 50 m.

FIG. 27 is a diagram showing an optical path in Numerical Example 3 when f is 39.45 mm and the object distance is infinity.

FIG. 28 is a diagram showing an optical path in Numerical Example 3 when f is 39.45 mm and the object distance is 25 m.

FIG. 29 shows an aberration chart of Numerical Example 3 when f is 10.30 mm and the object distance is 50 m.

FIG. 30 shows an aberration chart of Numerical Example 3 when f is 20.60 mm and the object distance is 50 m.

FIG. 31 shows an aberration chart of Numerical Example 3 when f is 39.45 mm and the object distance is 50 m.

FIG. 32 shows an aberration chart of Numerical Example 3 when f is 39.45 mm and the object distance is infinity.

FIG. 33 shows an aberration chart of Numerical Example 3 when f is 39.45 mm and the object distance is 25 m.

FIG. 34 shows a cross-sectional view of a zoom lens according to Example 4 of the present invention at the wide angle end.

FIG. 35 is a diagram showing an optical path in Numerical Example 4 when f is 20.60 mm and the object distance is 50 m.

FIG. 36 is a diagram showing an optical path in Numerical Example 4 when f is 41.20 mm and the object distance is 50 m.

FIG. 37 is a diagram showing an optical path in Numerical Example 4 when f is 78.90 mm and the object distance is 50 m.

FIG. 38 is a diagram showing an optical path in Numerical Example 4 when f is 78.90 mm and the object distance is infinity.

FIG. 39 is a diagram showing an optical path in Numerical Example 4 when f is 78.90 mm and the object distance is 25 m.

FIG. 40 shows an aberration chart of Numerical Example 4 when f is 20.60 mm and the object distance is 50 m.

FIG. 41 shows an aberration chart of Numerical Example 4 when f is 41.20 mm and the object distance is 50 m.

FIG. 42 shows an aberration chart of Numerical Example 4 when f is 78.90 mm and the object distance is 50 m.

FIG. 43 shows an aberration chart of Numerical Example 4 when f is 78.90 mm and the object distance is infinity.

FIG. 44 shows an aberration chart of Numerical Example 4 when f is 78.90 mm and the object distance is 25 m.

FIG. 45 is a conceptual diagram of a zoom lens according to an embodiment of the present invention.

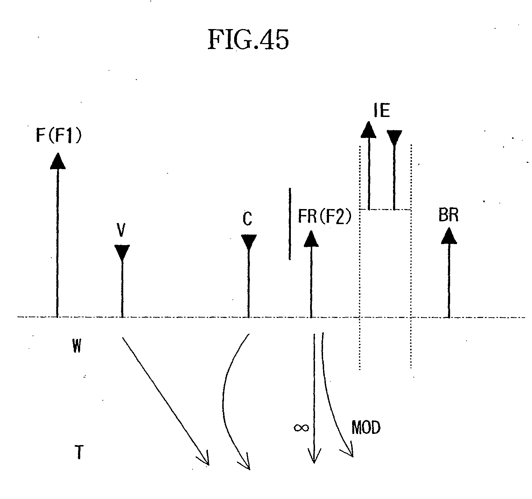

Hereinafter, a zoom lens according to an embodiment of the present invention is described with reference to the accompanying drawings. FIG. 45 shows a conceptual diagram of a zoom lens according to the present embodiment. In FIG. 45, reference character IE denotes a focal-length changing optical system, FR denotes a first lens unit having positive refractive power (optical power, i.e., reciprocal of focal length) which includes a movable focusing lens unit F2 located closer to the image side than a movable varying magnification lens unit V. Reference character BR denotes a second lens unit having positive refractive power which is disposed closer to the image side than the first lens unit FR having positive refractive power (which includes the movable focusing lens unit F2) and is fixed during zooming and focusing.

As shown in FIG. 45, the image-forming relationship in the lens systems located on the object side of the focal-length changing optical system IE does not change before and after insertion of the focal-length changing optical system IE. Therefore, the movement amount of the movable focusing lens unit F2 does not change.

Moreover, since the back focus is maintained substantially constant before and after insertion of the focal-length changing optical system IE, the image-forming relationship in the positive second lens unit BR does not change before and after insertion of the focal-length changing optical system IE. Accordingly, the movement amount of the imaging point resulting from the movement of the positive second lens unit BR on the optical axis is maintained constant, regardless of whether the focal-length changing optical system IE is inserted or detached.

As described above, by arranging the removable focal-length changing optical system IE on the image side of the movable focusing lens unit F2, the movement amount of the focusing lens unit F2 can be prevented from changing, regardless of whether the focal-length changing optical system IE is inserted or detached.

In addition, by arranging the positive second lens unit BR, which is fixed during zooming and focusing, on the image side of the focal-length changing optical system IE, the flange back can be maintained constant, regardless of whether the focal-length changing optical system IE is inserted or detached, and a flange back adjusting mechanism can be readily provided.

Furthermore, by providing the movable focusing lens unit F2 independently with respect to a lens unit which moves during zooming, a zooming mechanism using a mechanical cam or the like can be readily realized. This makes it possible to realize a zooming mechanism with favorable operability and tracing performance, which are desired for broadcasting and professional uses.

Further, it is possible to reduce the movement amount of the movable focusing lens unit F2 and to decrease the space required for movement of the movable focusing lens unit F2 and thus to reduce the size of the entire lens system, by specifying the difference between the incident reduced inclination angle and the exit reduced inclination angle (the emerging reduced inclination angle) of the movable focusing lens unit F2 using the following Formula (1):

$$\alpha F2^2 - \alpha' F2^2 < -0.01 \tag{1}$$

That is, when the incident reduced inclination angle and the exit reduced inclination angle of a subsystem X included in the optical system are represented as $\alpha X$ and $\alpha X'$, respectively, the image-forming magnification $\beta X$ can be expressed by the following Formula (2):

$$\beta X = \alpha X / \alpha X' \tag{2}$$

When the incident reduced inclination angle and the exit reduced inclination angle of a lens unit Y located closer to the image side than the subsystem X are represented as $\alpha Y$ and $\alpha Y'$, respectively, and $\alpha Y = \alpha X'$ and $\alpha Y' = 1$, the image-forming magnification $\beta Y$ can be expressed by the following Formula (3):

$$\beta Y = \alpha X' \tag{3}$$

Accordingly, the back focus sensitivity dsk of the subsystem X can be expressed by the following Formula (4):

$$
\begin{aligned}
dsk &= (1 - \beta X^2) \cdot \beta Y^2 \\
&= \{1 - (\alpha X / \alpha X')^2\} \cdot \alpha X'^2 \\
&\doteq \alpha X'^2 - \alpha X^2 \tag{4}
\end{aligned}
$$

Therefore, by specifying the upper limit of the difference between the incident reduced inclination angle and the exit reduced inclination angle by Formula (1) above, and by specifying the lower limit of the back focus sensitivity of the movable focusing lens unit F2 which can be expressed by Formula (4) above, it is possible to reduce the movement amount, thus decreasing the space required for movement of the movable focusing lens unit F2 and reducing the size of the entire lens system.

A lens unit F (front lens unit) is provided closer to the object side than the movable varying magnification lens unit V, and focusing is performed with the entire lens unit F or with a sub lens unit F1 of the lens unit F. When focusing is performed with the entire lens unit F or with the sub lens unit F1, the movement amount is maintained constant even during zooming, so that it is possible to readily achieve a focusing mechanism with favorable operability and tracing performance, which are desired for broadcasting and professional uses, using a helicoid, a mechanical cam or the like.

Furthermore, by performing manual focusing with the sub lens unit F1 and autofocusing with the movable focusing lens unit F2, a small driving force is sufficient for autofocusing, so that the size of the entire mechanism can be reduced.

Further, by using the movable focusing lens unit F2 as a lens unit which wobbles on the optical axis to detect the in-focus direction, the movable focusing lens unit F2 can also serve the wobbling function of moving the back focus forward and backward to determine the in-focus direction. Accordingly, the driving mechanism for wobbling can also be used as the driving mechanism for focusing, making it possible to reduce the size of the driving mechanism as a whole.

Alternatively, by providing the wobbling lens unit in the positive second lens unit BR, it is possible to decrease the change in the field angle resulting from wobbling, thus reducing the degradation of the image quality during determination of the in-focus direction.

In the following, zoom lenses according to examples of the present invention are described.

*Example 1*

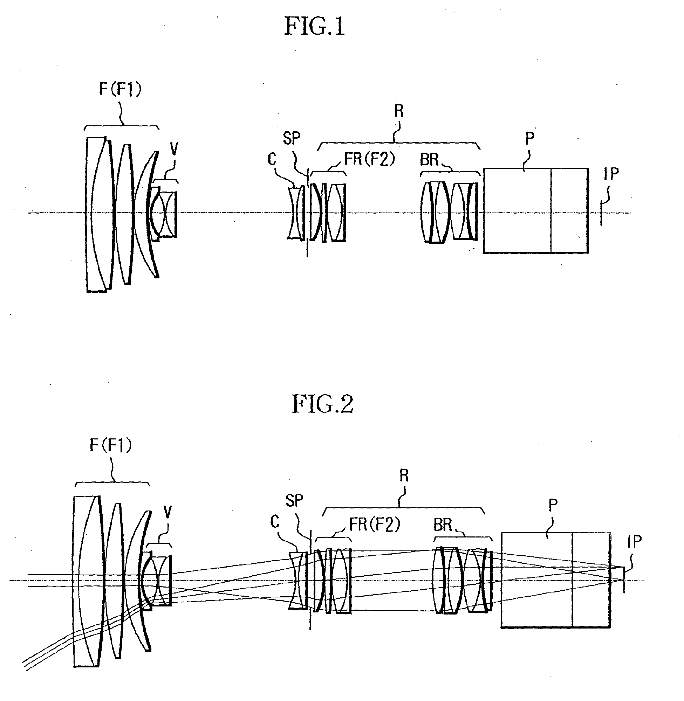

FIG. 1 shows a cross-sectional view of a zoom lens according to Example 1 of the present invention at the wide angle end at a magnification of 1x.

In FIG. 1, reference character F denotes a front lens unit as a first lens unit having positive refractive power. V denotes a variator lens unit for zooming as a second lens unit having negative refractive power which performs zooming from the wide angle end to the telephoto end by moving monotonously on the optical axis towards the image plane side. C denotes a compensator lens unit having negative refractive power which moves nonlinearly on the optical axis along a track which is convex toward the object side in order to compensate for shift of the image plane due to move of the variator lens unit V. The variator lens unit V and the compensator lens unit C together form a zooming system.

Reference character SP denotes a stop, and R denotes a fixed relay lens unit as a fourth lens unit having positive refractive power. P denotes a color separation prism, an optical filter or the like, which is shown as a glass block in the figure.

The relay lens unit has a positive lens unit FR including a movable focusing lens unit F2 and a positive lens unit BR which is located on the image side of the positive lens unit FR and is fixed during zooming and focusing. The compensator lens unit C as a third lens unit is independent of the movable focusing lens unit F2, so that a zooming mechanism can be readily realized using a mechanical cam or the like. Accordingly, it is possible to achieve a zooming mechanism with favorable operability and tracing performance, which are desired for broadcasting and professional uses.

In FIG. 1, the movable focusing lens unit F2 constitutes the entire lens unit FR, which is composed of three lens subunits consisting of four lenses, and has positive refractive power. The incident reduced inclination angle $\alpha$F2 and the exit reduced inclination angle $\alpha$'F2 of the lens unit FR when normalized by the focal length at the wide angle end are as follows:

$$\alpha F2 = -1.601937$$

$$\alpha'F2 = 0.000966$$

Accordingly, the back focus sensitivity of the lens unit FR is as follows:

$$\alpha'F2^2 - \alpha F2^2 = -2.5662$$

Therefore, the condition of Formula (1) above is satisfied.

Table 1 shows Numerical Example 1 of the present example. In Numerical Example 1, f represents the focal length, ri represents the radius of curvature of the i-th lens surface as counted from the object side, di represents the distance or air space between the i-th lens surface and the i + 1-th lens surface, and ni and vi represent, respectively, the refractive index and the Abbe number of the medium between the i-th lens surface and the i + 1-th lens surface as counted from the object side.

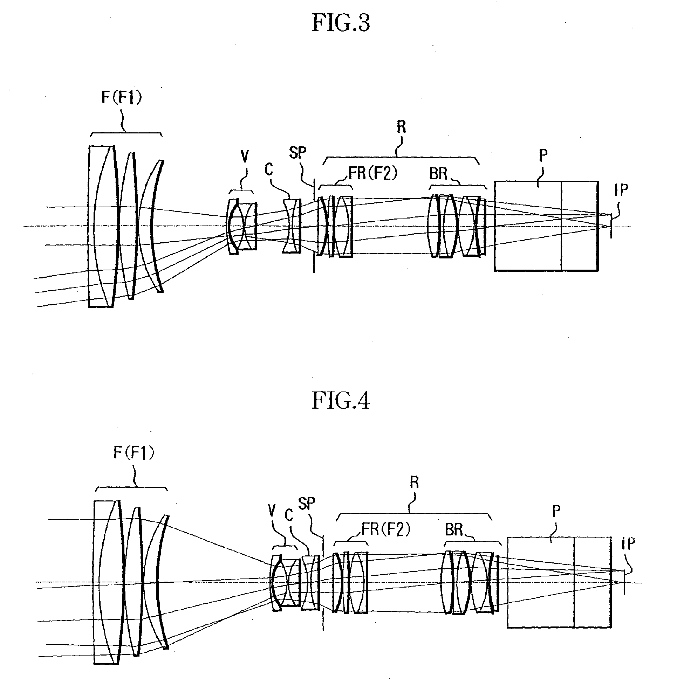

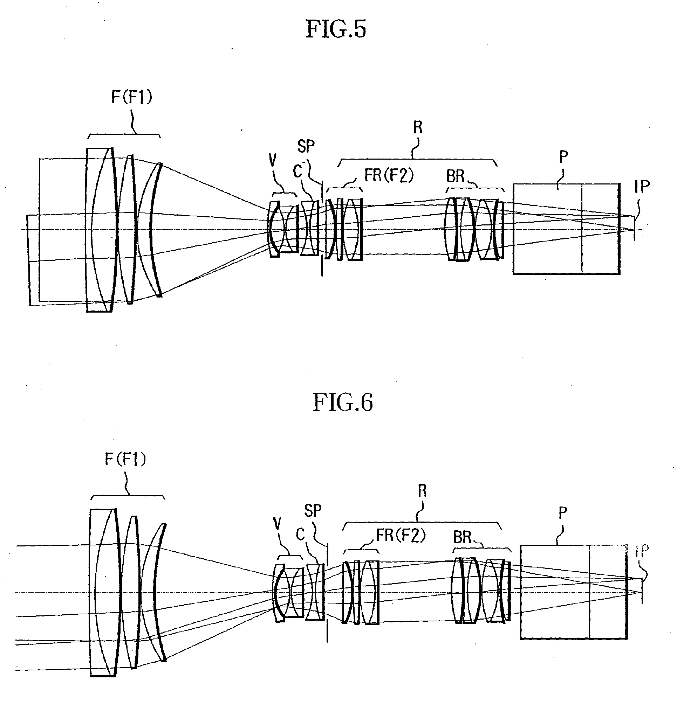

FIGs. 2 to 6 are diagrams showing optical paths of the present example. FIG. 2 is a diagram showing an optical path in Numerical Example 1 when f is 10.30 mm and the object distance is 2.5 m; FIG. 3 is a diagram showing an optical path in Numerical Example 1 when f is 39.45 mm and the object distance is 2.5 m; FIG. 4 is a diagram showing an optical path in Numerical Example 1 when f is 151.10 mm and the object distance is 2.5 m; FIG. 5 is a diagram showing an optical path in Numerical Example 1 when f is 151.10 mm and the object distance is infinity; and FIG. 6 is a diagram showing an optical path in Numerical Example 1 when f is 151.10 mm and the object distance is 1 m.

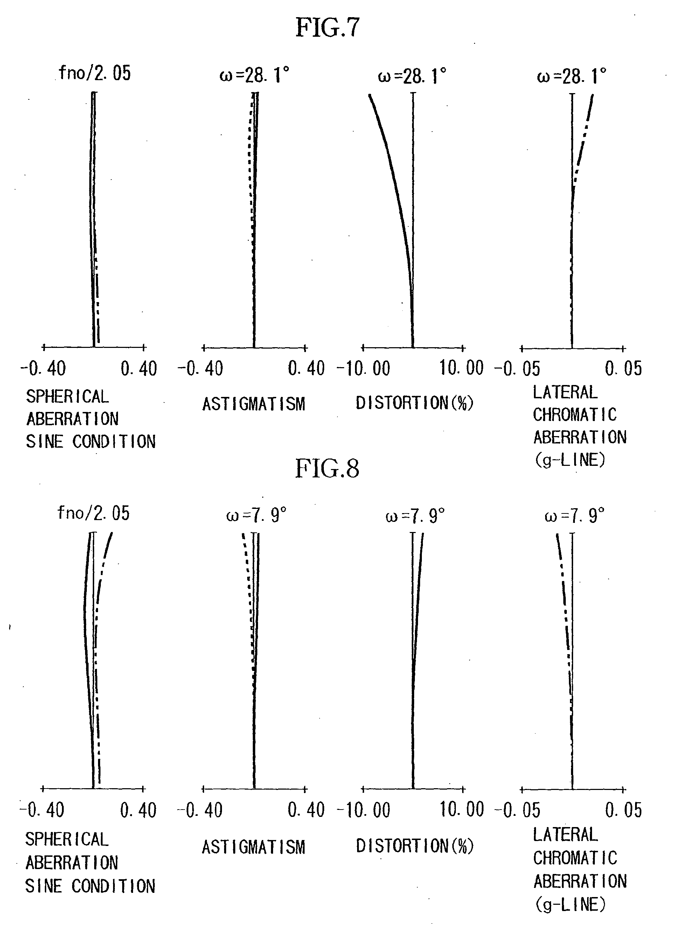

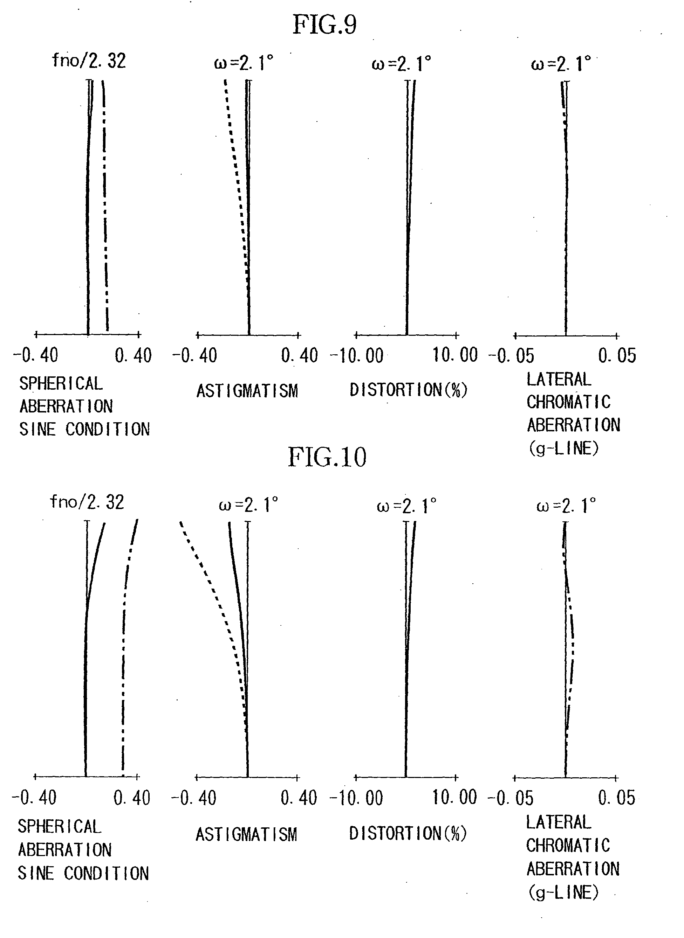

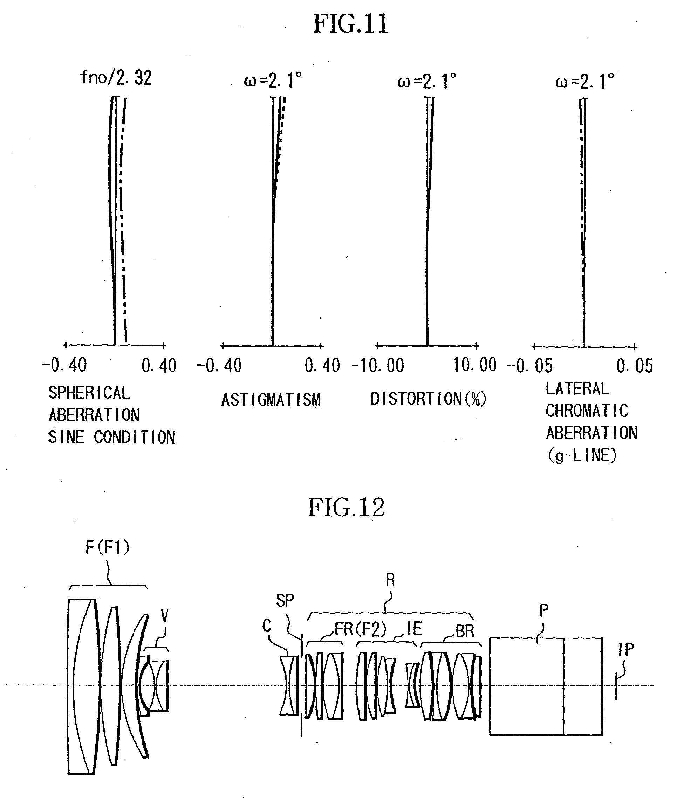

FIGs. 7 to 11 show aberration charts of the present example. FIG. 7 shows an aberration chart of Numerical Example 1 when f is 10.30 mm and the object distance is 2.5 m; FIG. 8 shows an aberration chart of Numerical Example 1 when f is 39.45 mm and the object distance is 2.5 m; FIG. 9 shows an aberration chart of Numerical Example 1 when f is 151.10 mm and the object distance is 2.5 m; FIG. 10 shows an aberration chart of Numerical Example 1 when f is 151.10 mm and the object distance is infinity; and FIG. 11 shows an aberration chart of Numerical Example 1 when f is 151.10 mm and the object distance is 1 m.

The movement amount of the movable focusing lens unit F2 at an object distance of 1 m and at the telephoto end as shown in FIG. 6 is 4.945 mm.

In the present example, the positive lens unit BR is moved in the direction of the optical axis for adjusting the flange back. Since

$$\alpha BR = 0.000966$$

$$\alpha'BR = 1$$

the back focus sensitivity of the positive lens unit BR is as follows:

$$\alpha'BR^2 - \alpha BR^2 = 1.0000$$

Accordingly, the flange back can be increased by 0.1 mm by moving the positive lens unit BR 0.1 mm towards the image side.

According to the present example, focusing can be performed with the front lens unit F which is located on the object side of the movable focusing lens unit and is fixed during zooming. When focusing is performed with the front lens unit, the movement amount is maintained constant even during zooming, so that it is possible to readily realize a focusing mechanism with favorable operability and tracing performance, which are desired for broadcasting and professional uses, using a helicoid, a mechanical cam or the like. Furthermore, the movable focusing lens unit F2 has a smaller diameter and a lighter weight than the front lens unit F, so that it is possible to realize both a manual focusing mechanism with favorable operability and a compact autofocusing mechanism which requires a small driving force, by performing manual focusing with the front lens unit F and autofocusing with the movable focusing lens unit F2.

By using the movable focusing lens unit F2 as a so-called wobbling lens unit which wobbles on the optical axis to detect the in-focus direction, it is possible to use the same driving mechanism for focusing and for wobbling. Therefore, it is possible to reduce the size and the weight of the entire mechanism.

Alternatively, the whole or a portion of the positive lens unit BR may be used as the wobbling lens unit.

## Numerical Example 1

f = 10.30          fno = 1 : 2.05          2ω = 56.2° ~4.2°
                        ~2.32

| | | | |
|---|---|---|---|
| r 1= 1169.481 | d 1= 2.40 | n 1=1.81265 | ν 1= 25.4 |
| r 2= 98.429 | d 2= 10.83 | n 2=1.51825 | ν 2= 64.2 |
| r 3= -265.170 | d 3= 0.20 | | |
| r 4= 124.037 | d 4= 8.29 | n 3=1.60548 | ν 3= 60.7 |
| r 5= -281.395 | d 5= 0.20 | | |
| r 6= 51.797 | d 6= 6.46 | n 4=1.64254 | ν 4= 60.1 |
| r 7= 97.915 | d 7= Variable | | |
| r 8= 71.045 | d 8= 0.90 | n 5=1.82017 | ν 5= 46.6 |
| r 9= 17.601 | d 9= 6.01 | | |
| r10= -21.542 | d10= 0.90 | n 6=1.77621 | ν 6= 49.6 |
| r11= 18.397 | d11= 4.63 | n 7=1.85501 | ν 7= 23.9 |
| r12= -4295.134 | d12= Variable | | |
| r13= -27.245 | d13= 0.90 | n 8=1.79013 | ν 8= 44.2 |
| r14= 31.613 | d14= 3.84 | n 9=1.85501 | ν 9= 23.9 |
| r15= 1125.345 | d15= Variable | | |
| r16= 0.000 (Stop) | d16= 1.60 | | |
| r17= 10000.000 | d17= 4.60 | n10=1.66152 | ν10= 50.9 |
| r18= -28.234 | d18= 0.20 | | |
| r19= 224.718 | d19= 2.53 | n11=1.48915 | ν11= 70.2 |
| r20= -178.770 | d20= 0.20 | | |
| r21= 40.193 | d21= 6.76 | n12=1.48915 | ν12= 70.2 |
| r22= -30.275 | d22= 1.20 | n13=1.83932 | ν13= 37.2 |
| r23= -1000.000 | d23= 35.00 | | |
| r24= 64.466 | d24= 4.96 | n14=1.48915 | ν14= 70.2 |
| r25= -66.907 | d25= 0.20 | | |
| r26= -126.587 | d26= 1.20 | n15=1.83932 | ν15= 37.2 |
| r27= 52.052 | d27= 6.25 | n16=1.48915 | ν16= 70.2 |
| r28= -35.300 | d28= 0.20 | | |
| r29= 42.999 | d29= 7.05 | n17=1.51976 | ν17= 52.4 |
| r30= -29.397 | d30= 1.20 | n18=1.80811 | ν18= 46.6 |
| r31= 78.312 | d31= 0.20 | | |
| r32= 46.698 | d32= 3.72 | n19=1.55098 | ν19= 45.8 |
| r33= -10000.000 | d33= 3.80 | | |
| r34= 0.000 | d34= 30.00 | n20=1.60718 | ν20= 38.0 |
| r35= 0.000 | d35= 16.20 | n21=1.51825 | ν21= 64.2 |
| r36= 0.000 | | | |

| Focal length / Variable spacing | 10.30 | 39.45 | 151.10 |
|---|---|---|---|
| d 7 | 0.39 | 33.92 | 49.55 |
| d 12 | 52.91 | 14.80 | 3.78 |
| d 15 | 1.55 | 6.13 | 1.53 |

Example 2

A zoom lens according to Example 2 has the same configuration as Example 1, except that a focal-length changing optical system is inserted. FIG. 12 shows a cross-sectional view of a zoom lens according to Example 2 of the present invention at the wide angle end.

In FIG. 12, reference character IE denotes a focal-length changing optical system. The conversion magnification of the focal-length changing optical system IE of the present example is 2.0x.

Table 2 shows Numerical Example 2 of the present example. In Numerical Example 2, reference characters such as f, ri, di, ni and νi are the same as those described in Numerical Example 1.

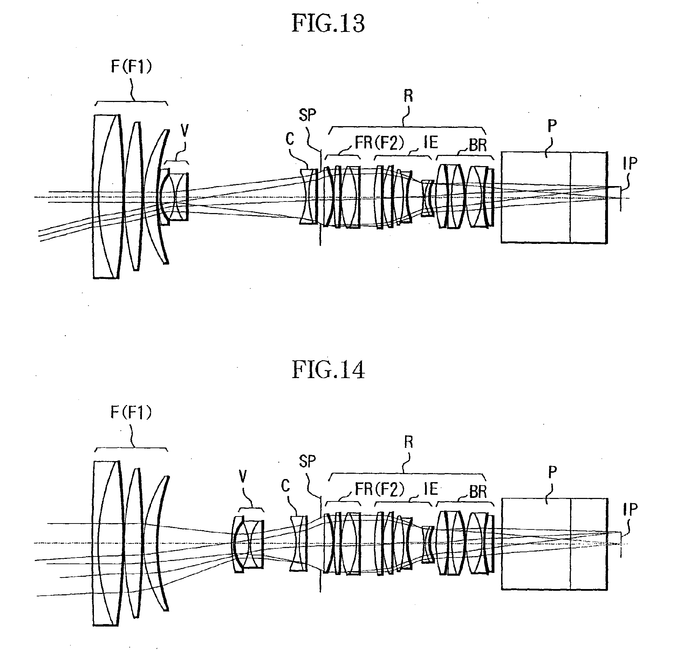

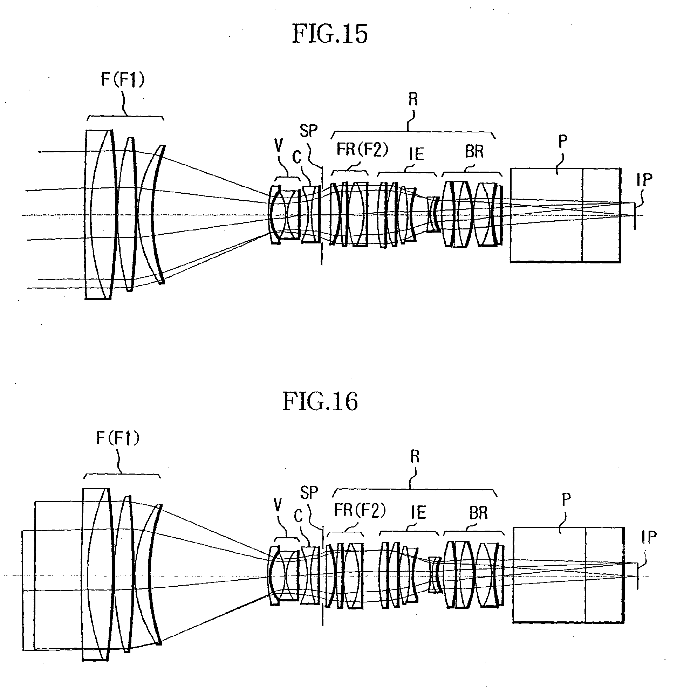

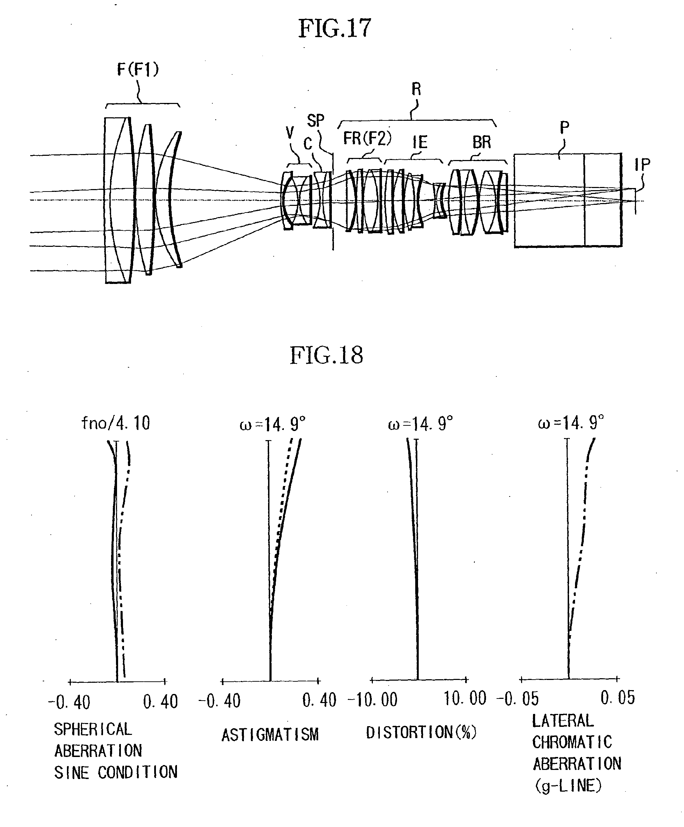

FIGs. 13 to 17 are diagrams showing optical paths of the present example. FIG. 13 is a diagram showing an optical path in Numerical Example 2 when f is 20.60 mm and the object distance is 2.5 m; FIG. 14 is a diagram showing an optical path in Numerical Example 2 when f is 78.90 mm and the object distance is 2.5 m; FIG. 15 is a diagram showing an optical path in Numerical Example 2 when f is 302.20 mm and the object distance is 2.5 m; FIG. 16 is a diagram showing an optical path in Numerical Example 2 when f is 302.20 mm and the object distance is infinity; and FIG. 17 is a diagram showing an optical path in Numerical Example 2 when f is 302.20 mm and the object distance is 1 m.

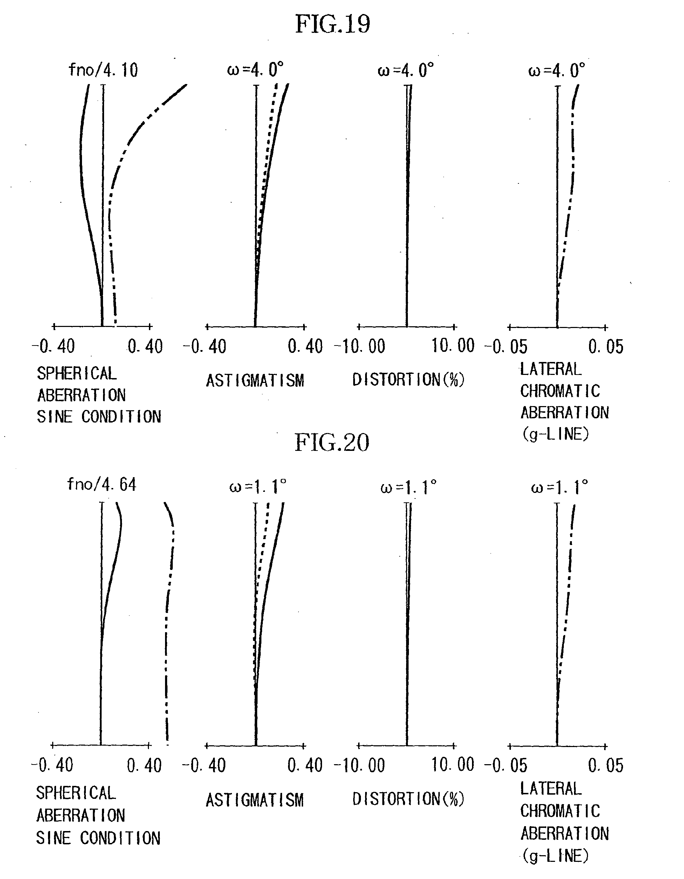

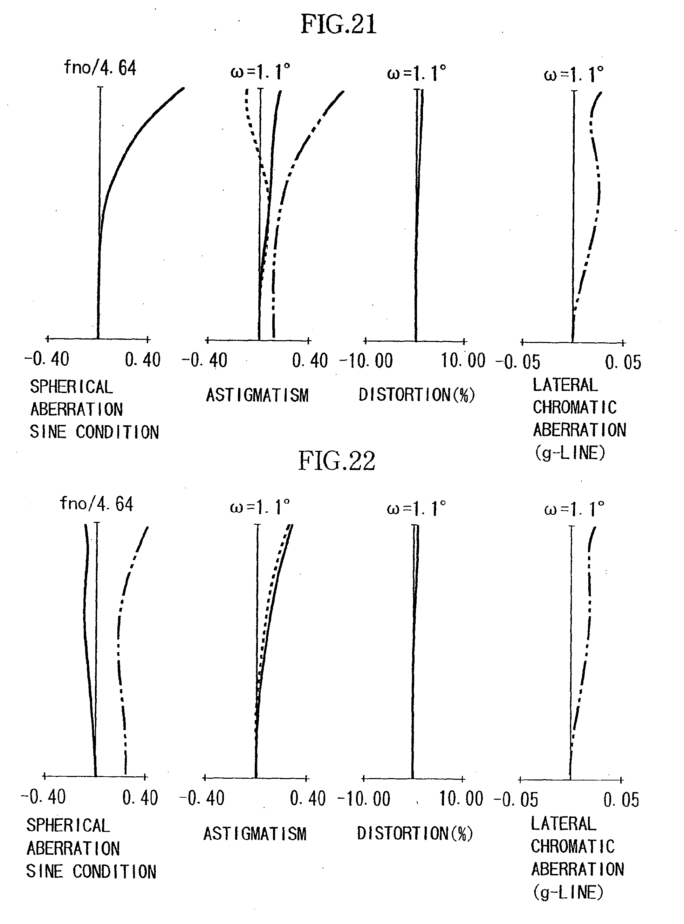

FIGs. 18 to 22 show aberration charts of the present example. FIG. 18 shows an aberration chart of Numerical Example 2 when f is 20.60 mm and the object distance is 2.5 m; FIG. 19 shows an aberration chart of Numerical Example 2 when f is 78.90 mm and the object distance is 2.5 m; FIG. 20 shows an aberration chart of Numerical Example 2 when f is 302.20 mm and the object distance is 2.5 m; FIG. 21 shows an aberration chart of Numerical Example 2 when f is 302.20 mm and the object distance is infinity; and FIG. 22 shows an aberration chart of Numerical Example 2 when f is 302.20 mm and the object distance is 1 m.

As shown in FIG. 17, the movement amount of the movable focusing lens unit F2 at an object distance of 1 m and at the telephoto end is 4.945 mm, and is the same as the value before insertion of the focal-length changing optical system IE (Example 1).

Since

$$\alpha BR = 0.000964$$

$$\alpha'BR = 1$$

the back focus sensitivity of the positive lens unit BR is as follows:

$$\alpha'BR^2 - \alpha BR^2 = 1.0000$$

This is the same as the value before insertion of the focal-length changing optical system IE (Example 1). Accordingly, a common flange back adjusting mechanism can be used regardless of whether the focal-length changing optical system IE is inserted or detached, thus significantly reducing the size and the weight of the zoom lens.

Furthermore, according to the present example, the movement amount is also maintained constant when focusing is performed with the front lens unit F, regardless of whether the focal-length changing optical system IE is inserted or detached.

## Numerical Example 2

f = 20.60          fno = 1 : 4.10          2ω = 29.9° ~2.1°
                                    ~4.64

```
r 1=   1169.481    d 1=    2.40    n 1=1.81265    ν 1= 25.4
r 2=     98.429    d 2=   10.83    n 2=1.51825    ν 2= 64.2
r 3=   -265.170    d 3=    0.20
r 4=    124.037    d 4=    8.29    n 3=1.60548    ν 3= 60.7
r 5=   -281.395    d 5=    0.20
r 6=     51.797    d 6=    6.46    n 4=1.64254    ν 4= 60.1
r 7=     97.915    d 7= Variable
r 8=     71.045    d 8=    0.90    n 5=1.82017    ν 5= 46.6
r 9=     17.601    d 9=    6.01
r10=    -21.542    d10=    0.90    n 6=1.77621    ν 6= 49.6
r11=     18.397    d11=    4.63    n 7=1.85501    ν 7= 23.9
r12=  -4295.134    d12= Variable
r13=    -27.245    d13=    0.90    n 8=1.79013    ν 8= 44.2
r14=     31.613    d14=    3.84    n 9=1.85501    ν 9= 23.9
r15=   1125.345    d15= Variable
r16=      0.000 (Stop)  d16=    1.60
r17=  10000.000    d17=    4.60    n10=1.66152    ν10= 50.9
r18=    -28.234    d18=    0.20
r19=    224.718    d19=    2.53    n11=1.48915    ν11= 70.2
r20=   -178.770    d20=    0.20
r21=     40.193    d21=    6.76    n12=1.48915    ν12= 70.2
r22=    -30.275    d22=    1.20    n13=1.83932    ν13= 37.2
r23=  -1000.000    d23=    7.00
r24=     60.000    d24=    3.21    n14=1.48915    ν14= 70.2
r25=      0.000    d25=    0.20
r26=     29.336    d26=    4.88    n15=1.49845    ν15= 81.5
r27=   -492.606    d27=    0.20
r28=     41.057    d28=    4.94    n16=1.73234    ν16= 54.7
r29=    -38.995    d29=    1.20    n17=1.65222    ν17= 33.8
r30=     31.053    d30=    7.51
r31=    -55.617    d31=    0.70    n18=1.73234    ν18= 54.7
r32=     14.386    d32=    2.11    n19=1.85504    ν19= 23.8
r33=     17.028    d33=    3.05
r34=     64.466    d34=    4.96    n20=1.48915    ν20= 70.2
r35=    -66.907    d35=    0.20
r36=   -126.587    d36=    1.20    n21=1.83932    ν21= 37.2
r37=     52.052    d37=    6.25    n22=1.48915    ν22= 70.2
r38=    -35.300    d38=    0.20
r39=     42.999    d39=    7.05    n23=1.51976    ν23= 52.4
r40=    -29.397    d40=    1.20    n24=1.80811    ν24= 46.6
r41=     78.312    d41=    0.20
r42=     46.698    d42=    3.72    n25=1.55098    ν25= 45.8
r43= -10000.000    d43=    3.80
r44=      0.000    d44=   30.00    n26=1.60718    ν26= 38.0
r45=      0.000    d45=   16.20    n27=1.51825    ν27= 64.2
r46=      0.000
```

| Focal length / Variable spacing | 20.60 | 78.90 | 302.20 |
|---|---|---|---|
| d 7 | 0.39 | 33.92 | 49.55 |
| d 12 | 2.91 | 14.80 | 3.78 |
| d 15 | 1.55 | 6.13 | 1.53 |

*Example 3*

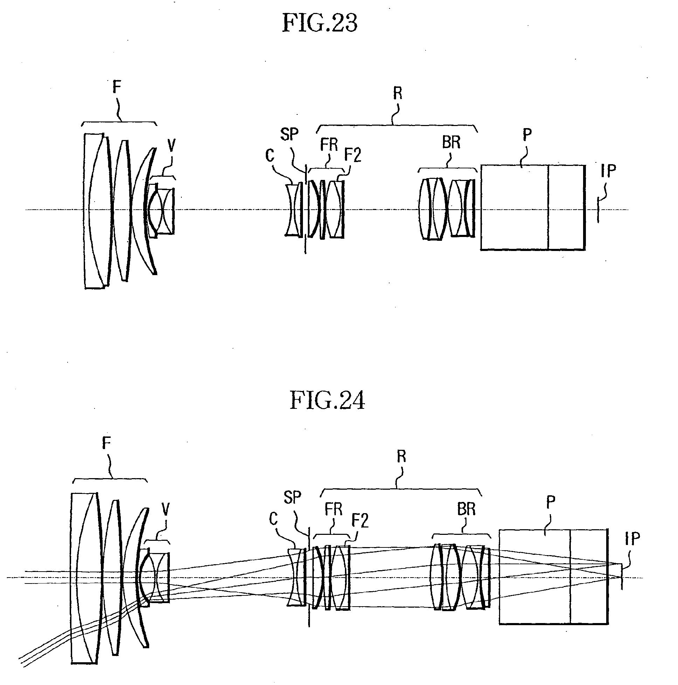

FIG. 23 shows a cross-sectional view of a zoom lens according to Example 3 of the present invention at the wide angle end.

In FIG. 23, a compensator lens unit C as a third lens unit is independent of a movable focusing lens unit F2, so that a zooming mechanism can be readily realized using a mechanical cam or the like. Accordingly, it is possible to realize a zooming mechanism with favorable operability and tracing performance, which are desired for broadcasting and professional uses.

In FIG. 23, reference character F denotes a front lens unit as a first lens unit having positive refractive power. V denotes a variator lens unit for zooming as a second lens unit having negative refractive power which performs zooming from the wide angle end to the telephoto end by moving monotonously on the optical axis towards the image side. C denotes a compensator lens unit having negative refractive power which moves nonlinearly on the optical axis along a track which is convex toward the object side to compensate for shift of the image plane due to move of the variator lens unit V. The variator lens unit V and the compensator lens unit C together form a zooming system.

Reference character SP denotes a stop, and R denotes a fixed relay lens unit as a fourth lens unit having positive refractive power. P denotes a color separation prism, an optical filter or the like, which is shown as a glass block in the figure.

In the present example, the movable focusing lens unit F2 is composed of one lens subunit consisting of two lenses with r21 to r23, and has positive refractive power. The incident reduced inclination angle $\alpha F2$ and the exit reduced inclination angle $\alpha' F2$ of the movable focusing lens unit F2 when normalized by the focal length at the wide angle end are as follows:

$$\alpha F2 = -0.102468$$

$$\alpha' F2 = 0.000966$$

Accordingly, the back focus sensitivity of the movable focusing lens unit F2 is as follows:

$$\alpha' F2^2 - \alpha F2^2 = -0.0105$$

Therefore, the condition of Formula (1) above is satisfied.

Table 3 shows Numerical Example 3 of the present example. In Numerical Example 3, reference characters such as f, ri, di, ni and vi are the same as those described in Numerical Example 1.

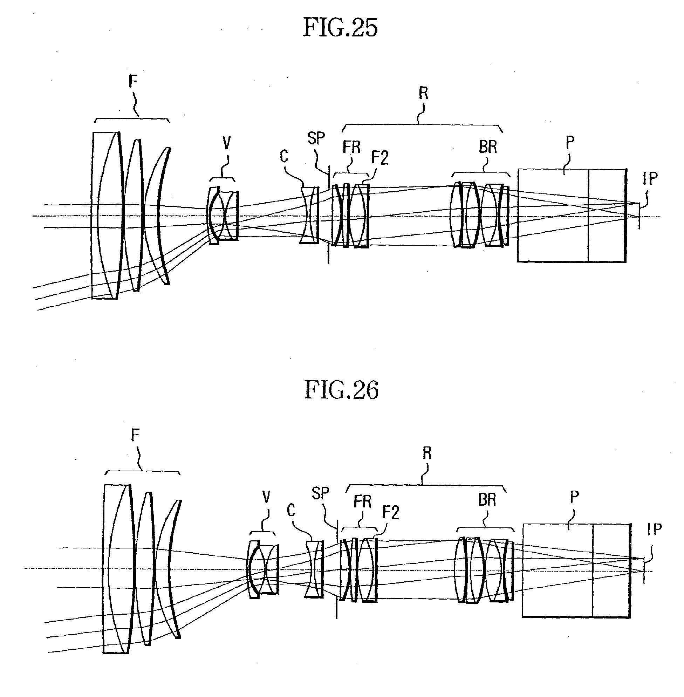

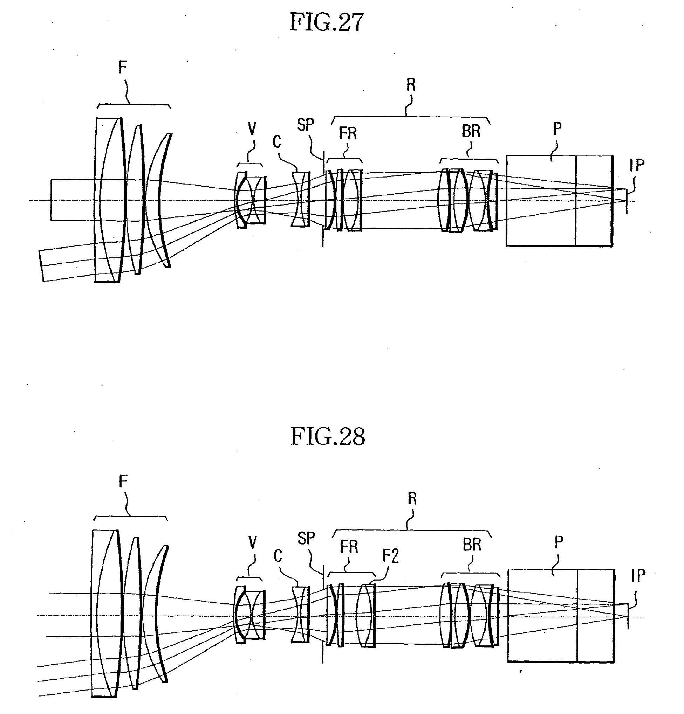

FIGs. 24 to 28 are diagrams showing optical paths of the present example when the focal-length changing optical system IE is inserted. FIG. 24 is a diagram showing an optical path in Numerical Example 3 when f is 10.30 mm and the object distance is 50 m; FIG. 25 is a diagram showing an optical path in Numerical Example 3 when f is 20.60 mm and the object distance is 50 m; FIG. 26 is a diagram showing an optical path in Numerical Example 3 when f is 39.45 mm and the object distance is 50 m; FIG. 27 is a diagram showing an optical path in Numerical Example 3 when f is 39.45 mm and the object distance is infinity; and FIG. 28 is a diagram showing an optical path in Numerical Example 3 when f is 39.45 mm and the object distance is 25 m.

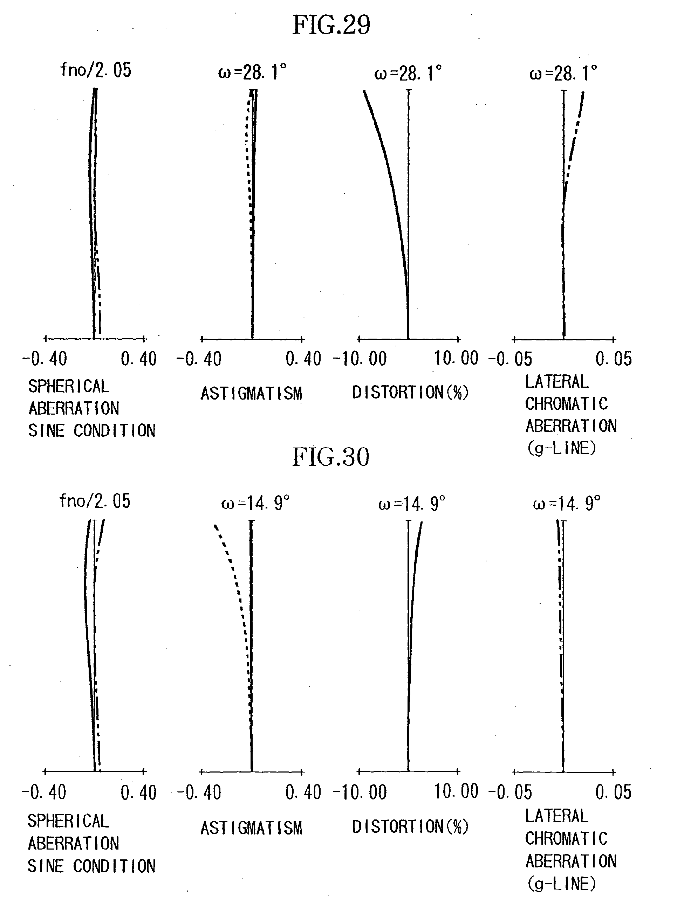

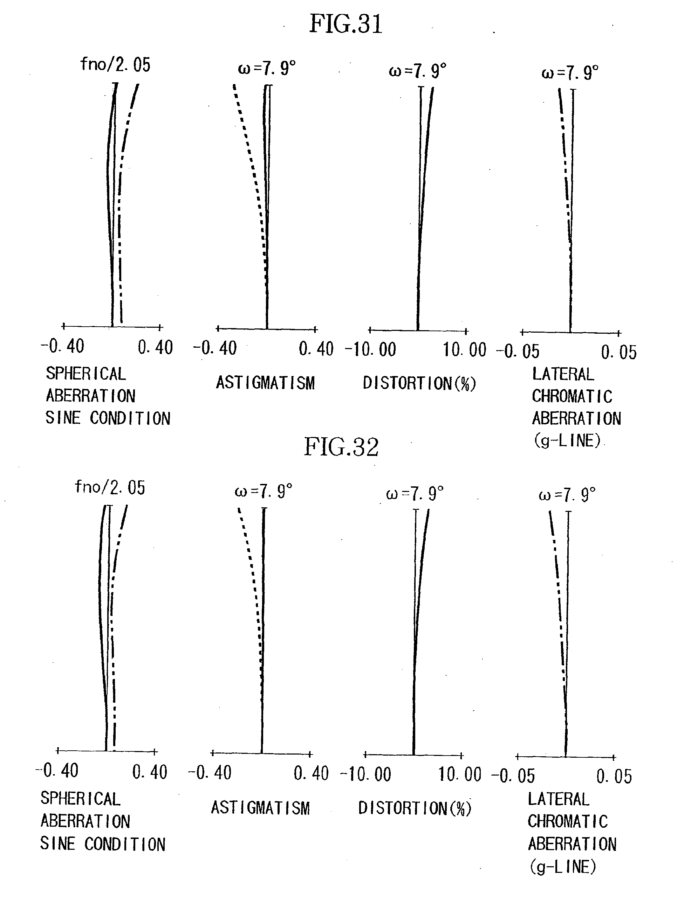

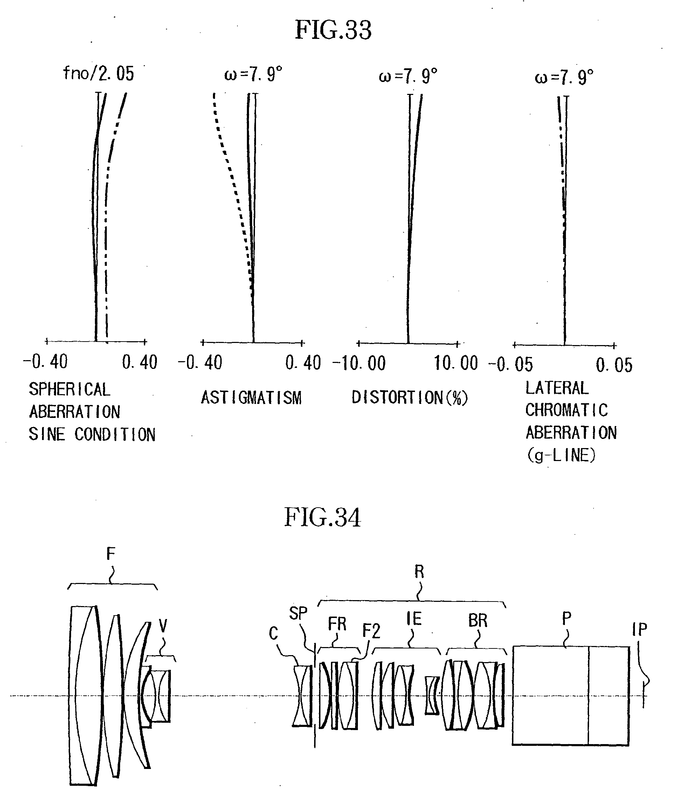

FIGs. 29 to 33 show aberration charts of the present example when the focal-length changing optical system IE is inserted. FIG. 29 shows an aberration chart of Numerical Example 3 when f is 10.30 mm and the object distance is 50 m; FIG. 30 shows an aberration chart of Numerical Example 3 when f is 20.60 mm and the object distance is 50 m; FIG. 31 shows an aberration chart of Numerical Example 3 when f is 39.45 mm and the object distance is 50 m; FIG. 32 shows an aberration chart of Numerical Example 3 when f is 39.45 mm and the object distance is infinity; and FIG. 33 shows an aberration chart of Numerical Example 3 when f is 39.45 mm and the object distance is 25 m.

The movement amount of the movable focusing lens unit F2 at an object distance of 25 m and at the telephoto end as shown in FIG. 28 is 5.820 mm.

In the present example, the positive lens unit BR (r24 to r33) is moved in the direction of the optical axis for adjusting the flange back. Since

$$\alpha BR = 0.000966$$

$$\alpha'BR = 1$$

the back focus sensitivity of the positive lens unit BR is as follows:

$$\alpha'BR^2 - \alpha BR^2 - 1.\,0000$$

Accordingly, the flange back can be increased by 0.1 mm by moving the positive lens unit BR 0.1 mm towards the image side.

According to the present example, focusing can be performed with the front lens unit F which is located on the object side of the movable zooming lens unit and is fixed during zooming. When focusing is performed with the front lens unit, the movement amount is maintained constant even during zooming, so that it is possible to readily realize a focusing mechanism with favorable operability and tracing performance, which are desired for broadcasting and professional uses, using a helicoid, a mechanical cam or the like. Furthermore, since the movable focusing lens unit F2 has a smaller diameter and a lighter weight than the front lens unit F, it is possible to realize both a manual focusing mechanism with favorable operability and a compact autofocusing mechanism which requires a small driving force, by performing manual focusing with the front lens unit F and autofocusing with the movable focusing lens unit F2.

By using the movable focusing lens unit F2 as a so-called wobbling lens unit which wobbles on the optical axis to detect the in-focus direction, it is possible to use the same driving mechanism for focusing and for wobbling, thus further reducing the size and the weight of the entire mechanism.

Alternatively, the whole or a portion of the positive lens unit BR may be used as the wobbling lens unit.

Numerical Example 3

## Numerical Example 3

f = 10.30            fno = 1 : 2.05            2ω = 56.2° ~15.9°

| | | | |
|---|---|---|---|
| r 1= 1169.481 | d 1= 2.40 | n 1=1.81265 | ν 1= 25.4 |
| r 2= 98.429 | d 2= 10.83 | n 2=1.51825 | ν 2= 64.2 |
| r 3= -265.170 | d 3= 0.20 | | |
| r 4= 124.037 | d 4= 8.29 | n 3=1.60548 | ν 3= 60.7 |
| r 5= -281.395 | d 5= 0.20 | | |
| r 6= 51.797 | d 6= 6.46 | n 4=1.64254 | ν 4= 60.1 |
| r 7= 97.915 | d 7= Variable | | |
| r 8= 71.045 | d 8= 0.90 | n 5=1.82017 | ν 5= 46.6 |
| r 9= 17.601 | d 9= 6.01 | | |
| r10= -21.542 | d10= 0.90 | n 6=1.77621 | ν 6= 49.6 |
| r11= 18.397 | d11= 4.63 | n 7=1.85501 | ν 7= 23.9 |
| r12= -4295.134 | d12= Variable | | |
| r13= -27.245 | d13= 0.90 | n 8=1.79013 | ν 8= 44.2 |
| r14= 31.613 | d14= 3.84 | n 9=1.85501 | ν 9= 23.9 |
| r15= 1125.345 | d15= Variable | | |
| r16= 0.000 (Stop) | d16= 1.60 | | |
| r17= 10000.000 | d17= 4.60 | n10=1.66152 | ν10= 50.9 |
| r18= -28.234 | d18= 0.20 | | |
| r19= 224.718 | d19= 2.53 | n11=1.48915 | ν11= 70.2 |
| r20= -178.770 | d20= 0.20 | | |
| r21= 40.193 | d21= 6.76 | n12=1.48915 | ν12= 70.2 |
| r22= -30.275 | d22= 1.20 | n13=1.83932 | ν13= 37.2 |
| r23= -1000.000 | d23= 35.00 | | |
| r24= 64.466 | d24= 4.96 | n14=1.48915 | ν14= 70.2 |
| r25= -66.907 | d25= 0.20 | | |
| r26= -126.587 | d26= 1.20 | n15=1.83932 | ν15= 37.2 |
| r27= 52.052 | d27= 6.25 | n16=1.48915 | ν16= 70.2 |
| r28= -35.300 | d28= 0.20 | | |
| r29= 42.999 | d29= 7.05 | n17=1.51976 | ν17= 52.4 |
| r30= -29.397 | d30= 1.20 | n18=1.80811 | ν18= 46.6 |
| r31= 78.312 | d31= 0.20 | | |
| r32= 46.698 | d32= 3.72 | n19=1.55098 | ν19= 45.8 |
| r33= -10000.000 | d33= 3.80 | | |
| r34= 0.000 | d34= 30.00 | n20=1.60718 | ν20= 38.0 |
| r35= 0.000 | d35= 16.20 | n21=1.51825 | ν21= 64.2 |
| r36= 0.000 | | | |

| Focal length / Variable spacing | 10.30 | 20.60 | 39.45 |
|---|---|---|---|
| d 7 | 0.39 | 20.78 | 33.92 |
| d 12 | 52.91 | 29.89 | 14.80 |
| d 15 | 1.55 | 4.18 | 6.13 |

*Example 4*

A zoom lens according to Example 4 has the same configuration as Example 3, except that a focal-length changing optical system is inserted. FIG. 34 shows a cross-sectional view of Example 4 of the present invention at the wide angle end.

In FIG. 34, reference character IE denotes a focal-length changing optical system. The conversion magnification of the focal-length changing optical system IE of the present example is 2.0x.

Table 4 shows Numerical Example 4 of the present example. In Numerical Example 4, reference characters such as f, ri, di, ni and νi are the same as those described in Numerical Example 1.

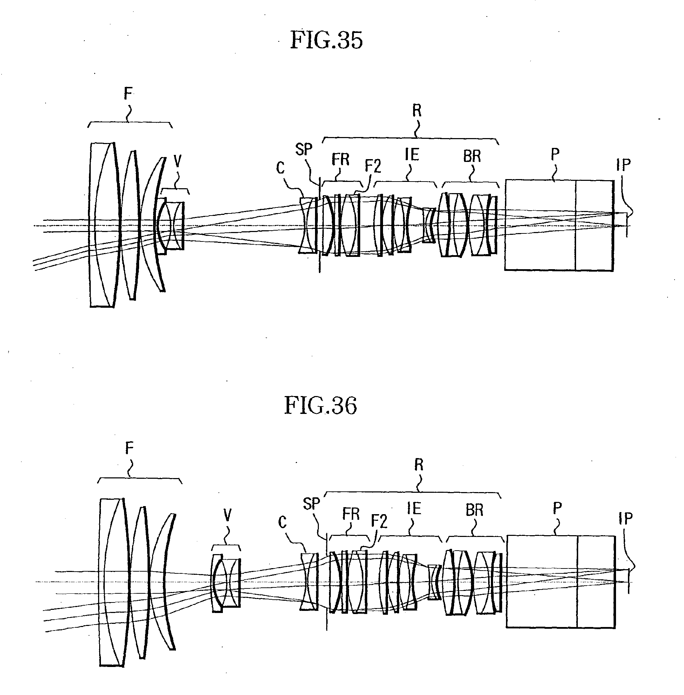

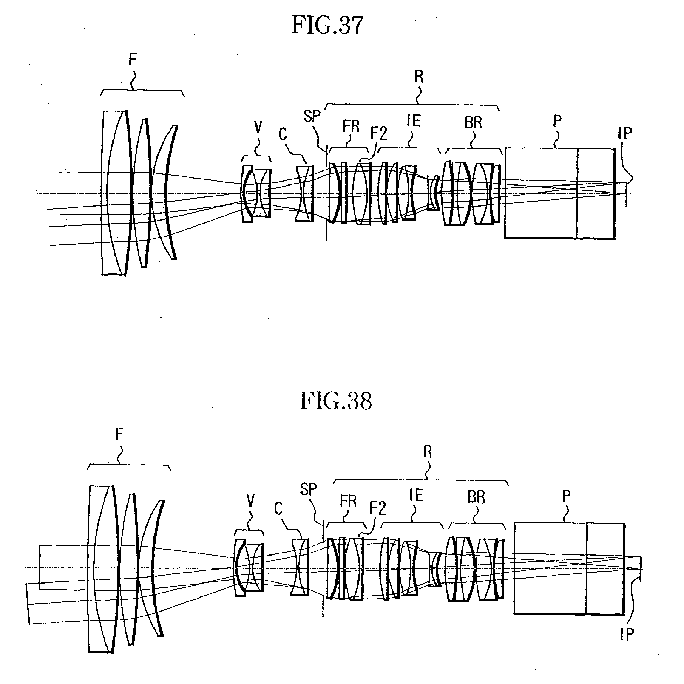

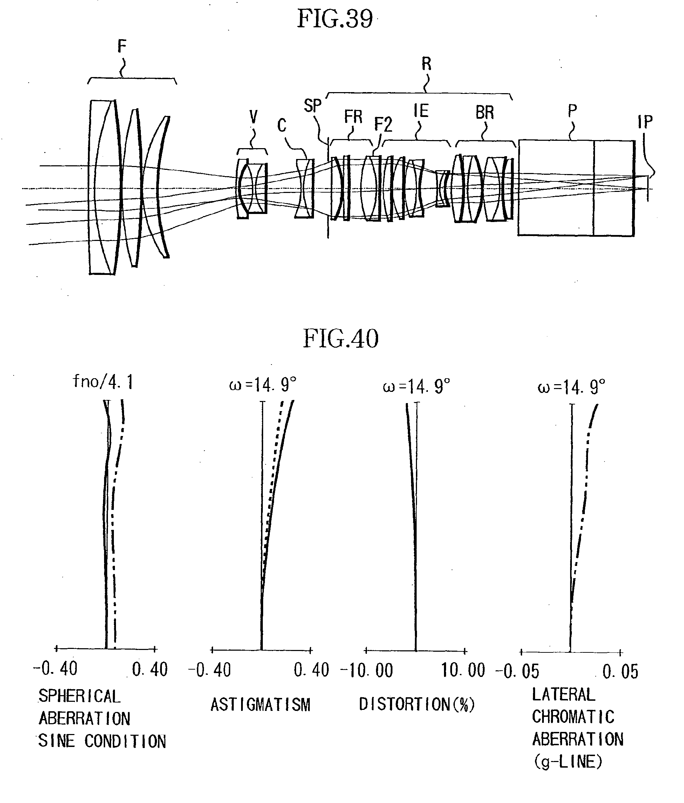

FIGs. 35 to 39 are diagrams showing optical paths of the present example. FIG. 35 is a diagram showing an optical path in Numerical Example 4 when f is 20.60 mm and the object distance is 50 m; FIG. 36 is a diagram showing an optical path in Numerical Example 4 when f is 41.20 mm and the object distance is 50 m; FIG. 37 is a diagram showing an optical path in Numerical Example 4 when f is 78.90 mm and the object distance is 50 m; FIG. 38 is a diagram showing an optical path in Numerical Example 4 when f is 78.90 mm and the object distance is infinity; and FIG. 39 is a diagram showing an optical path in Numerical Example 4 when f is 78.90 mm and the object distance is 25 m.

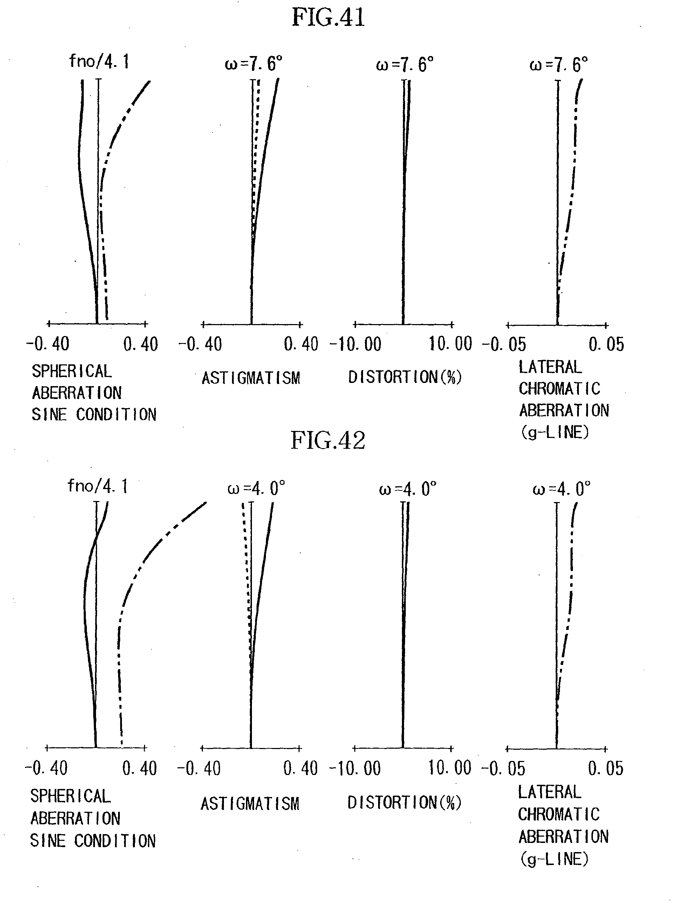

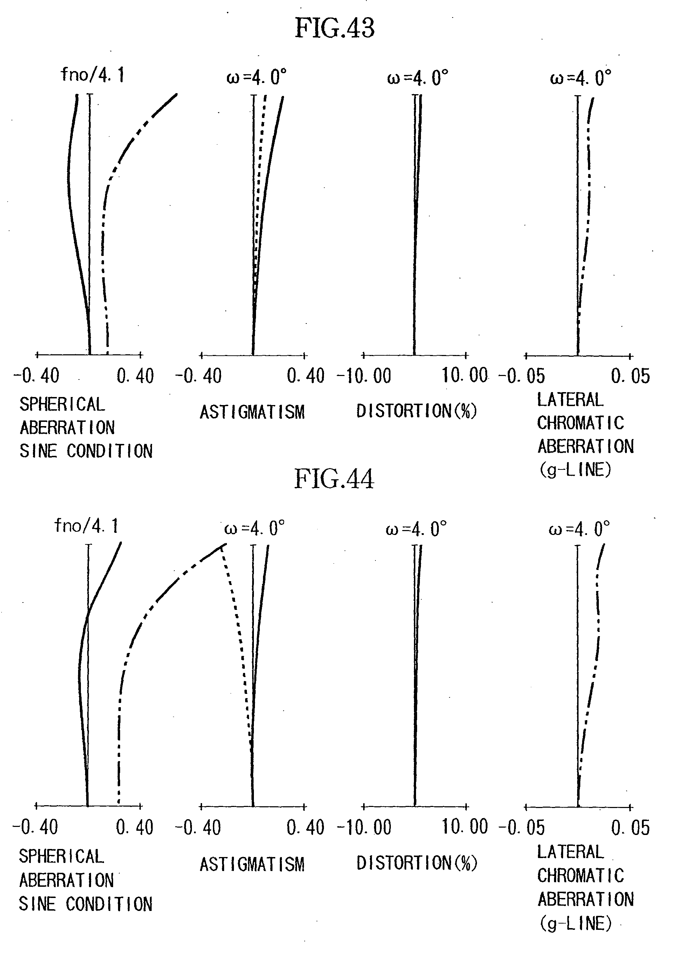

FIGs. 40 to 44 show aberration charts of the present example. FIG. 40 shows an aberration chart of Numerical Example 4 when f is 20.60 mm and the object distance is 50 m; FIG. 41 shows an aberration chart of Numerical Example 4 when f is 41.20 mm and the object distance is 50 m; FIG. 42 shows an aberration chart of Numerical Example 4 when f is 78.90 mm and the object distance is 50 m; FIG. 43 shows an aberration chart of Numerical Example 4 when f is 78.90 mm and the object distance is infinity; and FIG. 44 shows an aberration chart of Numerical Example 4 when f is 78.90 mm and the object distance is 25 m.

The movement amount of the movable focusing lens unit F2 at an object distance of 1 m and at the telephoto end as shown in FIG. 39 is 5.820 mm, and is the same as the value before insertion of the focal-length changing optical system IE (Example 3).

Since

$$\alpha BR = 0.000964$$

$$\alpha'BR = 1$$

the back focus sensitivity of the positive lens unit BR is as follows:

$$\alpha'BR^2 - \alpha BR^2 = 1.0000$$

This is the same as the value before insertion of the focal-length changing optical system IE (Example 3). Accordingly, a common flange back adjusting mechanism can be used, regardless of whether the focal-length changing optical system IE is inserted or detached, thus significantly reducing the size and the weight of the zoom lens.

Furthermore, according to the present example, the movement amount is also maintained constant when focusing is performed with the front lens unit F, regardless of whether the focal-length changing optical system IE is inserted or detached.

In the above-described examples, the entire front lens unit F is moved for focusing, but it is apparent that similar effects can also be achieved by moving only the subunit F1 of the front lens unit F.

In the above-described examples, the entire positive lens unit BR is moved in the direction of the optical axis for adjusting the flange back, it is apparent that similar effects can also be achieved by moving only a subunit of the positive lens unit BR.

**Numerical Example 4**

f = 20.60          fno = 1 : 4.1          2ω = 29.8° ~7.9°

| | | | | |
|---|---|---|---|---|
| r 1= 1169.481 | d 1= 2.40 | n 1=1.81265 | ν 1= 25.4 |
| r 2= 98.429 | d 2= 10.83 | n 2=1.51825 | ν 2= 64.2 |
| r 3= -265.170 | d 3= 0.20 | | |
| r 4= 124.037 | d 4= 8.29 | n 3=1.60548 | ν 3= 60.7 |
| r 5= -281.395 | d 5= 0.20 | | |
| r 6= 51.797 | d 6= 6.46 | n 4=1.64254 | ν 4= 60.1 |
| r 7= 97.915 | d 7= Variable | | |
| r 8= 71.045 | d 8= 0.90 | n 5=1.82017 | ν 5= 46.6 |
| r 9= 17.601 | d 9= 6.01 | | |
| r10= -21.542 | d10= 0.90 | n 6=1.77621 | ν 6= 49.6 |
| r11= 18.397 | d11= 4.63 | n 7=1.85501 | ν 7= 23.9 |
| r12= -4295.134 | d12= Variable | | |
| r13= -27.245 | d13= 0.90 | n 8=1.79013 | ν 8= 44.2 |
| r14= 31.613 | d14= 3.84 | n 9=1.85501 | ν 9= 23.9 |
| r15= 1125.345 | d15= Variable | | |
| r16= 0.000 (Stop) | d16= 1.60 | | |
| r17= 10000.000 | d17= 4.60 | n10=1.66152 | ν10= 50.9 |
| r18= -28.234 | d18= 0.20 | | |
| r19= 224.718 | d19= 2.53 | n11=1.48915 | ν11= 70.2 |
| r20= -178.770 | d20= 0.20 | | |
| r21= 40.193 | d21= 6.76 | n12=1.48915 | ν12= 70.2 |
| r22= -30.275 | d22= 1.20 | n13=1.83932 | ν13= 37.2 |
| r23= -1000.000 | d23= 7.00 | | |
| r24= 60.000 | d24= 3.21 | n14=1.48915 | ν14= 70.2 |
| r25= 0.000 | d25= 0.20 | | |
| r26= 29.336 | d26= 4.88 | n15=1.49845 | ν15= 81.5 |
| r27= -492.606 | d27= 0.20 | | |
| r28= 41.057 | d28= 4.94 | n16=1.73234 | ν16= 54.7 |
| r29= -38.995 | d29= 1.20 | n17=1.65222 | ν17= 33.8 |
| r30= 31.053 | d30= 7.51 | | |
| r31= -55.617 | d31= 0.70 | n18=1.73234 | ν18= 54.7 |
| r32= 14.386 | d32= 2.11 | n19=1.85504 | ν19= 23.8 |
| r33= 17.028 | d33= 3.05 | | |
| r34= 64.466 | d34= 4.96 | n20=1.48915 | ν20= 70.2 |
| r35= -66.907 | d35= 0.20 | | |
| r36= -126.587 | d36= 1.20 | n21=1.83932 | ν21= 37.2 |
| r37= 52.052 | d37= 6.25 | n22=1.48915 | ν22= 70.2 |
| r38= -35.300 | d38= 0.20 | | |
| r39= 42.999 | d39= 7.05 | n23=1.51976 | ν23= 52.4 |
| r40= -29.397 | d40= 1.20 | n24=1.80811 | ν24= 46.6 |
| r41= 78.312 | d41= 0.20 | | |
| r42= 46.698 | d42= 3.72 | n25=1.55098 | ν25= 45.8 |
| r43=-10000.000 | d43= 3.80 | | |
| r44= 0.000 | d44= 30.00 | n26=1.60718 | ν26= 38.0 |
| r45= 0.000 | d45= 16.20 | n27=1.51825 | ν27= 64.2 |
| r46= 0.000 | | | |

| Focal length / Variable spacing | 20.60 | 41.20 | 78.90 |
|---|---|---|---|
| d  7 | 0.39 | 20.78 | 33.92 |
| d 12 | 52.91 | 29.89 | 14.80 |
| d 15 | 1.55 | 4.18 | 6.13 |

According to the present invention, it is possible to realize a zoom lens which has a small movement amount of the movable focusing lens unit and is capable of maintaining the movement amount of the movable focusing lens unit constant, regardless of whether the focal-length changing optical system is inserted or detached. The zoom lens has favorable tracing performance and operability during manual zooming operations, is capable of performing autofocusing and manual focusing and achieves a high zoom ratio and compactness.

As many apparently widely different embodiments of the present invention can be made without departing from the spirit and scope thereof, it is to be understood that the invention is not limited to the specific embodiments thereof except as defined in the claims.

While preferred embodiments have been described, it is to be understood that modification and variation of the present invention may be made without departing from the scope of the following claims.

## Claims

1. A zoom lens **characterized by** comprising:

   a varying magnification lens unit which is movable;
   a focusing lens unit which is movable and is disposed on an image side with respect to the varying magnification lens unit; and
   a focal-length changing optical system arranged on the image side with respect to the focusing lens unit so as to be insertable onto and detachable from an optical axis of the zoom lens , which changes a focal length of the zoom lens.

2. The zoom lens according to claim 1, further comprising:

   a first lens unit with positive optical power which includes the focusing lens unit; and
   a second lens unit with positive optical power which is disposed on the image side with respect to the first lens unit and is fixed during zooming and focusing,

   **characterized in that** the focal-length changing optical system is inserted and detached at a position between the first lens unit and the second lens unit.

3. The zoom lens according to claim 1,
   **characterized in that** the following condition is satisfied:

$$\alpha F2^2 - \alpha' F2^2 < -0.01$$

   where $\alpha F2$ represents a incident reduced inclination angle of the focusing lens unit and $\alpha' F2$ represents a exit reduced inclination angle of the focusing lens unit.

4. The zoom lens according to claim 1, **characterized by** further comprising:

   a third lens unit which is disposed on an object side with respect to the varying magnification lens unit and is used for focusing.

5. The zoom lens according to claim 4,
   **characterized in that** manual focusing is performed with the third lens unit, and autofocusing is performed with the focusing lens unit.

6. The zoom lens according to claim 1,
   **characterized in that** the focusing lens unit includes a fourth lens unit which wobbles on an optical axis to detect an in-focus direction.

7. The zoom lens according to claim 2,
   **characterized in that** the second lens unit includes a fourth lens unit which wobbles on an optical axis to detect an in-focus direction.

8. The zoom lens according to claim 1, **characterized by** further comprising:

   a fifth lens unit with positive optical power which is disposed on an object side with respect to the varying magnification lens unit and is fixed during zooming; and
a sixth lens unit with negative optical power which is disposed on the image side with respect to the varying magnification lens unit and compensate for shift of an image plane due to move of the varying magnification lens unit.

9. An image-taking system **characterized by** comprising:

an image-taking apparatus; and
a zoom lens according to claim 1 which is mounted on the image-taking apparatus.

FIG.1

F(F1)

V

R

SP

C

FR(F2)

BR

P

IP

FIG.2

F(F1)

V

R

SP

C

FR(F2)

BR

P

IP

FIG.3

FIG.4

FIG.5

FIG.6

# FIG.7

fno/2. 05

ω=28. 1°

ω=28. 1°

ω=28. 1°

-0. 40    0. 40

SPHERICAL
ABERRATION
SINE CONDITION

-0. 40    0. 40

ASTIGMATISM

-10. 00    10. 00

DISTORTION(%)

-0. 05    0. 05

LATERAL
CHROMATIC
ABERRATION
(g-LINE)

# FIG.8

fno/2. 05

ω=7. 9°

ω=7. 9°

ω=7. 9°

-0. 40    0. 40

SPHERICAL
ABERRATION
SINE CONDITION

-0. 40    0. 40

ASTIGMATISM

-10. 00    10. 00

DISTORTION(%)

-0. 05    0. 05

LATERAL
CHROMATIC
ABERRATION
(g-LINE)

## FIG.9

fno/2. 32      ω=2. 1°      ω=2. 1°      ω=2. 1°

-0. 40    0. 40    -0. 40    0. 40    -10. 00    10. 00    -0. 05    0. 05

SPHERICAL      ASTIGMATISM      DISTORTION(%)      LATERAL
ABERRATION                                                      CHROMATIC
SINE CONDITION                                               ABERRATION
                                                                    (g-LINE)

## FIG.10

fno/2. 32      ω=2. 1°      ω=2. 1°      ω=2. 1°

-0. 40    0. 40    -0. 40    0. 40    -10. 00    10. 00    -0. 05    0. 05

SPHERICAL      ASTIGMATISM      DISTORTION(%)      LATERAL
ABERRATION                                                        CHROMATIC
SINE CONDITION                                                   ABERRATION
                                                                    (g-LINE)

# FIG.11

fno/2. 32          ω=2. 1°          ω=2. 1°          ω=2. 1°

-0. 40      0. 40   -0. 40      0. 40   -10. 00      10. 00   -0. 05      0. 05

SPHERICAL          ASTIGMATISM      DISTORTION(%)    LATERAL
ABERRATION                                           CHROMATIC
SINE CONDITION                                       ABERRATION
                                                     (g-LINE)

# FIG.12

FIG.13

F(F1)

V

SP

R

C

FR(F2)  IE  BR

P

IP

FIG.14

F(F1)

V

SP

R

C

FR(F2)  IE  BR

P

IP

EP 1 530 072 A1

## FIG.15

F(F1)  R  SP  V  C  FR(F2)  IE  BR  P  IP

## FIG.16

F(F1)  R  SP  V  C  FR(F2)  IE  BR  P  IP

25

## FIG.17

## FIG.18

| fno/4. 10 | ω =14. 9° | ω =14. 9° | ω =14. 9° |
|---|---|---|---|
| -0. 40    0. 40 | -0. 40    0. 40 | -10. 00    10. 00 | -0. 05    0. 05 |
| SPHERICAL ABERRATION SINE CONDITION | ASTIGMATISM | DISTORTION(%) | LATERAL CHROMATIC ABERRATION (g-LINE) |

## FIG.19

fno/4.10

$\omega = 4.0°$

$\omega = 4.0°$

$\omega = 4.0°$

-0.40    0.40

SPHERICAL
ABERRATION
SINE CONDITION

-0.40    0.40

ASTIGMATISM

-10.00    10.00

DISTORTION(%)

-0.05    0.05

LATERAL
CHROMATIC
ABERRATION
(g-LINE)

## FIG.20

fno/4.64

$\omega = 1.1°$

$\omega = 1.1°$

$\omega = 1.1°$

-0.40    0.40

SPHERICAL
ABERRATION
SINE CONDITION

-0.40    0.40

ASTIGMATISM

-10.00    10.00

DISTORTION(%)

-0.05    0.05

LATERAL
CHROMATIC
ABERRATION
(g-LINE)

## FIG.21

fno/4. 64          ω=1. 1°          ω=1. 1°          ω=1. 1°

-0. 40    0. 40   -0. 40    0. 40  -10. 00   10. 00  -0. 05    0. 05

SPHERICAL          ASTIGMATISM      DISTORTION(%)    LATERAL
ABERRATION                                           CHROMATIC
SINE CONDITION                                       ABERRATION
                                                     (g-LINE)

## FIG.22

fno/4. 64          ω=1. 1°          ω=1. 1°          ω=1. 1°

-0. 40    0. 40   -0. 40    0. 40  -10. 00   10. 00  -0. 05    0. 05

SPHERICAL          ASTIGMATISM      DISTORTION(%)    LATERAL
ABERRATION                                           CHROMATIC
SINE CONDITION                                       ABERRATION
                                                     (g-LINE)

FIG.23

FIG.24

FIG.25

FIG.26

FIG.27

FIG.28

## FIG.29

fno/2. 05

ω=28. 1°

ω=28. 1°

ω=28. 1°

-0. 40    0. 40   -0. 40    0. 40  -10. 00    10. 00  -0. 05    0. 05

SPHERICAL
ABERRATION
SINE CONDITION

ASTIGMATISM

DISTORTION(%)

LATERAL
CHROMATIC
ABERRATION
(g-LINE)

## FIG.30

fno/2. 05

ω=14. 9°

ω=14. 9°

ω=14. 9°

-0. 40    0. 40  -0. 40    0. 40  -10. 00    10. 00  -0. 05    0. 05

SPHERICAL
ABERRATION
SINE CONDITION

ASTIGMATISM

DISTORTION(%)

LATERAL
CHROMATIC
ABERRATION
(g-LINE)

## FIG.31

fno/2. 05          ω =7. 9°          ω =7. 9°          ω =7. 9°

-0. 40      0. 40    -0. 40      0. 40    -10. 00      10. 00    -0. 05      0. 05

SPHERICAL          ASTIGMATISM          DISTORTION(%)          LATERAL
ABERRATION                                                     CHROMATIC
SINE CONDITION                                                 ABERRATION
                                                              (g-LINE)

## FIG.32

fno/2. 05          ω =7. 9°          ω =7. 9°          ω =7. 9°

-0. 40      0. 40    -0. 40      0. 40    -10. 00      10. 00    -0. 05      0. 05

SPHERICAL          ASTIGMATISM          DISTORTION(%)          LATERAL
ABERRATION                                                     CHROMATIC
SINE CONDITION                                                 ABERRATION
                                                              (g-LINE)

## FIG.33

| fno/2. 05 | ω=7. 9° | ω=7. 9° | ω=7. 9° |
|---|---|---|---|
| -0.40    0.40 | -0.40    0.40 | -10.00    10.00 | -0.05    0.05 |
| SPHERICAL ABERRATION SINE CONDITION | ASTIGMATISM | DISTORTION(%) | LATERAL CHROMATIC ABERRATION (g-LINE) |

## FIG.34

FIG.35

FIG.36

## FIG.37

## FIG.38

# FIG.39

F  R  SP  FR  F2  IE  BR  P  IP  V  C

# FIG.40

fno/4.1    ω=14.9°    ω=14.9°    ω=14.9°

-0.40    0.40   -0.40    0.40   -10.00    10.00   -0.05    0.05

SPHERICAL
ABERRATION
SINE CONDITION

ASTIGMATISM

DISTORTION(%)

LATERAL
CHROMATIC
ABERRATION
(g-LINE)

## FIG.41

fno/4. 1      ω=7. 6°      ω=7. 6°      ω=7. 6°

-0. 40    0. 40    -0. 40    0. 40    -10. 00    10. 00    -0. 05    0. 05

SPHERICAL ABERRATION SINE CONDITION    ASTIGMATISM    DISTORTION(%)    LATERAL CHROMATIC ABERRATION (g-LINE)

## FIG.42

fno/4. 1      ω=4. 0°      ω=4. 0°      ω=4. 0°

-0. 40    0. 40    -0. 40    0. 40    -10. 00    10. 00    -0. 05    0. 05

SPHERICAL ABERRATION SINE CONDITION    ASTIGMATISM    DISTORTION(%)    LATERAL CHROMATIC ABERRATION (g-LINE)

# FIG.43

fno/4. 1     ω=4. 0°     ω=4. 0°     ω=4. 0°

-0. 40   0. 40   -0. 40   0. 40   -10. 00  10. 00   -0. 05   0. 05

SPHERICAL
ABERRATION
SINE CONDITION    ASTIGMATISM    DISTORTION(%)    LATERAL
CHROMATIC
ABERRATION
(g-LINE)

# FIG.44

fno/4. 1     ω=4. 0°     ω=4. 0°     ω=4. 0°

-0. 40   0. 40   -0. 40   0. 40   -10. 00  10. 00   -0. 05   0. 05

SPHERICAL
ABERRATION
SINE CONDITION    ASTIGMATISM    DISTORTION(%)    LATERAL
CHROMATIC
ABERRATION
(g-LINE)

# FIG.45

**European Patent Office**

## EUROPEAN SEARCH REPORT

Application Number

EP 04 25 6596

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 745 298 A (YAHAGI ET AL) 28 April 1998 (1998-04-28) * figures 1,4 * * column 1, line 47 - column 2, line 19 * * column 4, line 54 - column 5, line 13; claims * | 1,2,9 | G02B15/17 G02B15/10 |
| D,X | & JP 08 201697 A 9 August 1996 (1996-08-09) ----- | 1,2,9 | |
| Y | EP 1 148 369 A (CANON KABUSHIKI KAISHA) 24 October 2001 (2001-10-24) * abstract; figure 2 * * paragraph [0120] * * paragraph [0159] - paragraph [0162] * ----- | 1,2,4,8, 9 | |
| Y,D | PATENT ABSTRACTS OF JAPAN vol. 018, no. 241 (P-1733), 9 May 1994 (1994-05-09) & JP 06 027381 A (COPAL CO LTD), 4 February 1994 (1994-02-04) * abstract; figure * ----- | 1,2,4,8, 9 | |
| A | EP 1 092 999 A (CANON KABUSHIKI KAISHA) 18 April 2001 (2001-04-18) * paragraph [0029] * * paragraph [0059] * * paragraph [0097] * * paragraph [0099] * * figure 27b * ----- | 1,3,4 | TECHNICAL FIELDS SEARCHED (Int.Cl.7) G02B |
| A | EP 1 220 001 A (CANON KABUSHIKI KAISHA) 3 July 2002 (2002-07-03) * abstract; figures 1-6 * ----- | 1,6-8 | |

The present search report has been drawn up for all claims

| Place of search | Date of completion of the search | Examiner |
|---|---|---|
| Berlin | 22 February 2005 | Hylla, W |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 04 25 6596

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2005

| Patent document cited in search report | | Publication date | Patent family member(s) | | Publication date |
|---|---|---|---|---|---|
| US 5745298 | A | 28-04-1998 | JP | 8201697 A | 09-08-1996 |
| | | | DE | 19537307 A1 | 18-04-1996 |
| | | | FR | 2725800 A1 | 19-04-1996 |
| JP 8201697 | A | 09-08-1996 | DE | 19537307 A1 | 18-04-1996 |
| | | | FR | 2725800 A1 | 19-04-1996 |
| | | | US | 5745298 A | 28-04-1998 |
| EP 1148369 | A | 24-10-2001 | JP | 3517630 B2 | 12-04-2004 |
| | | | JP | 2001281546 A | 10-10-2001 |
| | | | JP | 2002287030 A | 03-10-2002 |
| | | | DE | 60107613 D1 | 13-01-2005 |
| | | | EP | 1148369 A2 | 24-10-2001 |
| | | | US | 2002018297 A1 | 14-02-2002 |
| JP 06027381 | A | 04-02-1994 | NONE | | |
| EP 1092999 | A | 18-04-2001 | JP | 3564014 B2 | 08-09-2004 |
| | | | JP | 2001100099 A | 13-04-2001 |
| | | | EP | 1092999 A2 | 18-04-2001 |
| EP 1220001 | A | 03-07-2002 | JP | 2002258157 A | 11-09-2002 |
| | | | DE | 60100933 D1 | 13-11-2003 |
| | | | DE | 60100933 T2 | 12-08-2004 |
| | | | EP | 1220001 A1 | 03-07-2002 |
| | | | US | 2002149692 A1 | 17-10-2002 |

EPO FORM P0459